# FASCICULE DE BREVET EUROPEEN

(11) **EP 3 535 425 B1**
(45) Date de publication et mention de la délivrance du brevet: **12.01.2022**
(21) Numéro de dépôt: 17792101.2
(22) Date de dépôt: 06.11.2017
(51) Int. Cl.: C22C 38/00, C22C 38/58, C21D 5/00, C21D 8/06, C21D 9/02, C22C 1/02, C22C 37/08, C21C 7/04, C21C 7/076, C21C 7/10, C22C 38/40, C22C 38/50, G04B 17/06, G04B 43/00, C21D 6/00

(54) **RESONATEUR POUR PIECE D'HORLOGERIE**
RESONATOR FÜR UHRSTÜCK
RESONATOR FOR A CLOCK PIECE

(30) Priorité: 04.11.2016 EP 16306448
(43) Date de publication de la demande: 11.09.2019
(73) Titulaire: Richemont International SA, 1752 Villars-sur-Glane (CH)
(72) Inventeur: POMMIER, Stéphane, 2800 Delemont (CH); DIOLOGENT, Frédéric, 2000 Neuchâtel (CH)
(74) Mandataire: Cabinet Laurent & Charras
(86) Numéro de dépôt international: PCT/EP2017/078365
(87) Numéro de publication internationale: WO 2018/083311

(56) Documents cités:
- EP-A1- 2 455 508
- WO-A1-00/73528
- GB-A- 1 284 066
- GB-A- 2 128 633
- JP-A- H0 941 087
- US-A- 3 735 971

## Description

### DOMAINE DE L'INVENTION

La présente invention concerne un alliage antiferromagnétique à base de fer et de manganèse ainsi que son procédé de préparation (mise en alliage et transformation). L'invention concerne également des pièces mécaniques composées au moins en partie de cet alliage antiferromagnétique.

Le domaine d'utilisation de la présente invention concerne l'horlogerie, en particulier les résonateurs pour pièce d'horlogerie.

### ETAT ANTERIEUR DE LA TECHNIQUE

Un résonateur pour pièce d'horlogerie a pour fonction première de résonner de manière invariable quel que soit l'environnement dans lequel il se trouve. C'est la raison pour laquelle un résonateur est préférentiellement constitué d'un matériau élinvar (constitué par exemple de 59 % de fer, 36 % de nickel, et 5 % de chrome), c'est-à-dire que son module d'Young (ou d'élasticité) reste insensible aux variations de températures (Charles-Edouard Guillaume, prix Nobel de physique de 1920). Les documents EP 1 422 436 et EP 0 886 195 proposent des solutions permettant d'avoir des matériaux qui sont, en plus, insensibles aux champs magnétiques. De manière générale, un résonateur est fabriqué à partir d'alliages complexes et coûteux.

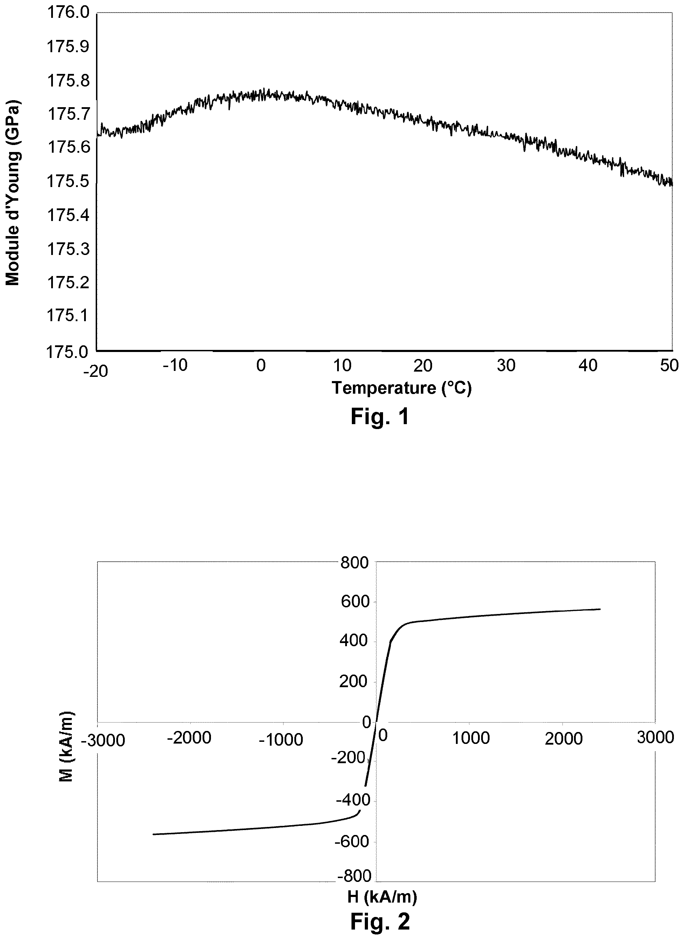

Historiquement, l'alliage le plus utilisé est une base fer-nickel. Plusieurs additifs ont été incorporés à cet alliage de base pour conférer les propriétés requises de résistance mécanique, de résistance à la corrosion, ou encore de résistance aux variations de température ou de pression. Ainsi, les alliages dont les résonateurs pour pièce d'horlogerie sont constitués comprennent généralement, en plus du fer et du nickel, plusieurs additifs tels que le chrome, le silicium, le titane, le manganèse et le béryllium. Cet alliage, connu comme l'alliage Nivarox, est un alliage élinvar présentant un module d'Young insensible aux changements de température. En outre, son module d'Young varie très légèrement dans les températures considérées (-15 à -50 °C en général) mais beaucoup moins que la plupart des alliages (figure 1).

Cependant, les procédés de fabrication de ces alliages sont complexes et la reproductibilité de ceux-ci est limitée, ce qui peut entrainer des modifications des propriétés mécaniques intrinsèques des alliages. Le principal problème de cet alliage est qu'il est sensible aux champs magnétiques. Or, ces dernières années, l'environnement magnétique des montres à bien changé avec les nouvelles technologies telles que les téléphones portables, les bracelets connectés et les ordinateurs portables ou l'augmentation de la puissance et du nombre d'aimants dans la vie quotidienne (fermoir de sac à mains, fermeture de portes ou encore détecteurs de métaux).

Par ailleurs, l'évolution des réglementations sur les produits chimiques étant constante, la plupart des alliages connus ne peuvent ou ne pourront plus nécessairement être produits dans le futur. En effet, bon nombre d'entre eux contiennent des éléments potentiellement dangereux pour la santé comme des allergènes, des cancérigènes, des mutagènes ou des reprotoxiques. Ainsi, il serait très avantageux de développer un nouvel alliage ayant toutes les propriétés mécaniques, magnétiques, de résistance à la corrosion, élinvar (module d'Young insensible aux changements de température) et étant inoffensifs pour la santé pour servir de matériau de base d'un résonateur pour pièce d'horlogerie.

Une alternative aux alliages métalliques a été développée. Cette alternative consiste à graver des galettes de silicium ce qui rend entre-autres le procédé de fabrication reproductible. Cependant, notamment dans le cas d'une utilisation en tant que ressort spiral, le comportement mécanique n'est pas homogène en fonction de l'axe du mouvement (EP 1 422 436). D'autre part, les procédés de fabrication actuels limitent les géométries du résonateur ainsi que les opérations de correction par déformation plastique par exemple, comme la réalisation d'une courbe terminale Phillips ou Breguet. Le document GB 1284066 décrit un alliage comprenant 0,5-1,5 % de vanadium et au moins 1 % de molybdène. Le document JP 0941087 décrit un alliage comprenant 0,03-0,10 % de carbone, 0,05-0,50 % de silicium et 0,5-7 % de molybdène. Le document US 3,735,971 décrit un alliage comprenant 0,03-1 % de carbone ou d'un mélange de carbone et d'azote. GB 2128633 décrit un alliage comprenant du silicium et du cobalt. Le Demandeur a mis au point un nouvel alliage antiferromagnétique à base de fer et de manganèse remédiant aux problèmes de l'art antérieur. Cet alliage peut servir de matériau pour la fabrication d'un résonateur pour pièce d'horlogerie. En effet, cet alliage présente les propriétés mécaniques requises pour pouvoir être mis en forme pour former un ressort spiral par exemple, ce qui n'est pas le cas de tous les alliages antiferromagnétiques (Liu et al., Acta Materialia, 2003, 51, 507-519). Pour cela, l'alliage doit pouvoir être tréfilé, laminé, enroulé et présenter des propriétés élastiques adéquates.

L'alliage antiferromagnétique selon l'invention est principalement constitué de fer et de manganèse. Eu égard à sa composition et à son procédé de préparation, il procure une alternative peu onéreuse et pouvant être aisément mise en œuvre par rapport aux matériaux de l'art antérieur.

De manière générale, l'alliage antiferromagnétique selon l'invention est exempt de cobalt et de béryllium.

Cet alliage présente une dureté comprise entre 200 Hv et 400 Hv, préférentiellement entre 280 Hv et 370 Hv, ce qui est adapté pour une utilisation dans le domaine de l'horlogerie.

Cet alliage présente un module d'Young compris entre 150 GPa et 250 GPa, préférentiellement entre 160 GPa et 200 GPa, ce qui est adapté pour une utilisation dans le domaine de l'horlogerie.

Ainsi, l'invention concerne également un procédé de fabrication de cet alliage antiferromagnétique et son utilisation dans le domaine de l'horlogerie, par exemple pour fabriquer un résonateur pour pièce d'horlogerie.

### Alliage

Selon la revendication 1, un premier mode de réalisation de l'invention est un alliage antiferromagnétique ayant une composition constituée de :
- 10,0 % à 30,0 % en poids de manganèse,
- 4,0 % à 10,0 % en poids de chrome,
- 5,0 % à 15,0 % en poids de nickel,
- 0,1 % à 2,0 % en poids de titane, l'alliage étant exempt de béryllium,
- le reste étant du fer et des impuretés résiduelles.

Les pourcentages sont exprimés en poids par rapport au poids de l'alliage antiferromagnétique.

Il s'agit d'un alliage dont la composition est homogène. Les éléments sont donc répartis de manière homogène au sein de l'alliage.

Cet alliage est constitué des éléments ci-dessus. En d'autres termes, elle ne comprend pas d'autres éléments. Ainsi, cet alliage est dépourvu de cobalt et de béryllium.

L'alliage est avantageusement dépourvu d'impuretés résiduelles. Ainsi, il comprend avantageusement moins de 1 500 ppm d'impuretés résiduelles, par rapport à son poids, plus avantageusement moins de 600 ppm.

Les ppm sont exprimées en poids par rapport au poids de l'alliage antiferromagnétique.

Les impuretés résiduelles peuvent correspondre à au moins un des éléments suivants : silicium, carbone, soufre, oxygène et azote. Dans cet alliage, la concentration en silicium n'excède pas 500 ppm. En outre, la concentration en carbone ou oxygène ou de soufre n'excède pas 100 ppm. Finalement, la concentration en azote n'excède pas 20 ppm.

De manière avantageuse, la teneur en manganèse est comprise entre 10 % et 30 % en poids, plus avantageusement entre 24,0 % et 26,0 % en poids, et encore plus avantageusement entre 24,0 et 24,6 % en poids. La teneur en manganèse est importante, car c'est associé au manganèse que le fer se transforme en une phase antiferromagnétique. Il en faut donc suffisamment pour que le fer ne soit plus ferromagnétique. En revanche, il est inutile de dépasser la concentration optimum en manganèse.

De manière avantageuse, la teneur en chrome est comprise entre 4,0 % et 10,0 % en poids, plus avantageusement entre 6,5 % et 9,0 % en poids, et encore plus avantageusement entre 7,0 et 9,0 % en poids, préférentiellement entre 7,3 et 8,1 % en poids. Le chrome forme une couche d'oxyde protectrice au contact de l'air (aussi appelée couche de passivation) qui empêche une corrosion prématurée du matériau. Une quantité trop faible en chrome ne permet pas d'avoir les propriétés anticorrosion.

De manière avantageuse, la teneur en nickel est comprise entre 5,0 % et 15,0 % en poids, plus avantageusement entre 5,5 % et 7,5 % en poids, préférentiellement entre 6,3 et 6,6 % en poids. Le nickel sert à stabiliser la phase antimagnétique fer-manganèse qui n'est sans cela stable qu'à des températures supérieures à la température ambiante. Selon un autre mode de réalisation, la teneur en titane est avantageusement comprise entre 0,5 % et 2,0 % en poids, plus avantageusement entre 0,3 % et 1,3 % en poids, et encore plus avantageusement entre 0,3 % et 1,2 % en poids, préférentiellement entre 0,5 et 0,8 % en poids. Le titane est un durcisseur, il sert à obtenir les propriétés mécaniques nécessaires au procédé de transformation de la matière. Par contre, son affinité avec l'oxygène et l'azote en font une pompe à impuretés. En d'autres termes, la présence de titane favorise également la présence d'impuretés. C'est pour cela que sa teneur est limitée.

Selon un mode de réalisation particulier, l'alliage antiferromagnétique est constitué de :
- 24,0 à 26,0 % en poids de manganèse,
- 7,0 à 9,0 % en poids de chrome,
- 5,5 à 7,5 % en poids de nickel,
- 0,3 à 1,2 % en poids de titane,
- l'alliage étant exempt de béryllium,
- le reste étant du fer et des impuretés résiduelles.

Selon un mode de réalisation particulier, l'alliage antiferromagnétique est constitué de :
- 24,0 à 24,6 % en poids de manganèse,
- 7,3 à 8,1 % en poids de chrome,
- 6,3 à 6,6 % en poids de nickel,
- 0,5 à 0,8 % en poids de titane,
- l'alliage étant exempt de béryllium,
- le reste étant du fer et des impuretés résiduelles.

La quantité de fer est ajustée en fonction des modes de réalisation et correspond à la quantité nécessaire pour atteindre 100 % en poids. Comme déjà indiqué, la quantité d'impuretés est avantageusement inférieure à 1 500 ppm.

### Utilisation de l'alliage

De manière avantageuse, l'alliage antiferromagnétique selon l'invention est utilisé dans le domaine de l'horlogerie, notamment pour la fabrication d'un composant de mouvement horloger.

Aussi, la présente invention concerne également un composant de mouvement horloger au moins en partie constitué de cet alliage antiferromagnétique. Il est avantageusement intégralement constitué de cet alliage.

Selon un autre mode de réalisation particulier, le composant de mouvement horloger est un résonateur, au moins en partie constitué de cet alliage antiferromagnétique. De manière avantageuse, le résonateur est entièrement constitué de l'alliage antiferromagnétique.

Selon un autre mode de réalisation particulier, le résonateur est sous forme de ressort spiral, mais il peut aussi s'agir d'un résonateur à lames flexibles, comme un diapason, ou encore d'un résonateur de type à pivot virtuel, faisant appel au principe de guidage flexible.

L'invention concerne également un mouvement horloger comprenant au moins un des composants constitué au moins en partie de cet alliage antiferromagnétique.

L'invention concerne également une montre comprenant un mouvement horloger dont au moins un des composants comprend cet alliage antiferromagnétique.

Cette montre comprend au moins un composant au moins en partie constitué de l'alliage antiferromagnétique. De manière préférée, le composant est un résonateur et de manière plus préférée, le composant est un ressort spiral intégralement constitué de l'alliage selon l'invention.

### Procédé de fabrication et façonnage de l'alliage antiferromagnétique

Le procédé de fabrication de l'alliage antiferromagnétique selon l'invention comporte au moins une fonte et une étape de purification. La fonte permet de former l'alliage avec les métaux désirés. La deuxième fonte permet de purifier l'alliage par le retrait d'un maximum d'impuretés. Une attention particulière est portée sur le manganèse dont la pression partielle de son gaz est relativement élevée aux températures de fusion de l'alliage. De manière avantageuse, le procédé selon l'invention permet de conserver la même quantité de manganèse avant et après une fonte et une étape de purification.

Le procédé selon la revendication 11 est un procédé pour réaliser un alliage selon l'une des revendications 1 à 5 comportant notamment les étapes successives suivantes :
- une étape de fonte des constituants de l'alliage, réalisée en une ou plusieurs phases, permettant de former l'alliage contenant les métaux désirés, et opérée à une température T_{fon} égale ou supérieure à la température de fonte des constituants de l'alliage,
   les constituants de l'alliage étant au moins à base de fer et à base de manganèse,
- une étape de purification, réalisée en une ou plusieurs phases, permettant d'enlever les impuretés des constituants de l'alliage tout en limitant l'évaporation de manganèse, et opérée à une température Tₚᵤᵣ et à une pression P supérieure à la pression atmosphérique.

De manière avantageuse, à l'issue de l'étape de purification, l'alliage présente une teneur totale en impuretés inférieure ou égale à 1500 ppm. Les impuretés sont celles mentionnées ci-dessus.

L'étape de purification à la pression P est réalisée de manière à limiter l'évaporation du manganèse. Ainsi, de manière avantageuse, la variation de la teneur en manganèse résultant de l'étape de purification opérée à la température Tₚᵤᵣ et sous pression P ne dépasse pas 5 %. En d'autres termes, il résulte de l'étape de purification une variation en manganèse avantageusement inférieure ou égale à 5 % en poids, par rapport à la quantité de manganèse résultant de l'étape de fonte.

Ainsi, le procédé de fabrication de l'alliage antiferromagnétique selon l'invention comporte au moins les étapes successives suivantes :
a) une étape de fonte des constituants de l'alliage permettant de former l'alliage avec les métaux désirés ; cette étape peut par exemple être réalisée dans un four à arc (notamment un four à arc électrique) ou un four à induction sous vide (VIM : vacuum induction melting),
b) une fonte de l'alliage obtenu à l'étape a) permettant de purifier l'alliage tout en limitant la variation de la teneur en manganèse, notamment en limitant son évaporation en réalisant cette étape à une pression supérieure à la pression atmosphérique. Sans se limiter à ces techniques, cette étape peut par exemple être réalisée par une technique choisie parmi la refusion sous laitier électro-conducteur sous pression (PESR : pressure electro slag remelting) ou encore en creuset froid pour permettre la dissolution des impuretés et des inclusions. L'étape de purification est ainsi réalisée par un procédé impliquant une refusion à une pression supérieure à la pression atmosphérique, avantageusement un procédé de refusion sous laitier électro-conducteur à une pression supérieure à la pression atmosphérique.

La température Tₚᵤᵣ est comprise entre 1250 et 1450 °C, avantageusement entre 1300 et 1400 °C.

En outre, la température T_{fon} de l'étape de fonte des constituants de l'alliage est comprise entre 1250 °C et 1450 °C, avantageusement entre 1300 °C et 1400 °C.

Pour l'étape de purification, il est important de noter que le manganèse tend à s'évaporer assez rapidement au-delà d'une certaine température. Or, la teneur de l'alliage final en manganèse étant très importante à l'obtention de certaines propriétés du matériau, il est important de recourir à un procédé limitant son évaporation. Alors que l'évaporation dépend, au-delà d'une certaine température, de la pression d'exposition de la matière au procédé, une étape réalisée sous pression réduit sensiblement la variation de la concentration en manganèse.

L'étape de purification opérée à une température Tₚᵤᵣ selon la plage énoncée précédemment est réalisée à une pression P supérieure à 10 bar, avantageusement supérieure à 20 bar, et encore plus avantageusement supérieure à 40 bar. La pression P est inférieure ou égale à 50 bar.

En revanche, l'étape de fonte n'est pas nécessairement réalisée à une pression supérieure à la pression atmosphérique. Elle peut notamment être réalisée sous vide par exemple dans un four à induction sous vide.

Afin d'utiliser cet alliage dans le domaine de l'horlogerie, il est façonné selon les techniques conventionnelles. Il est à noter que le procédé décrit ci-dessus peut tout aussi être appliqué, sans sortir du cadre de l'invention, à tout alliage comprenant les éléments fer et manganèse, notamment à tout alliage dans lequel la teneur en manganèse devait être maîtrisée.

Ainsi, de manière générale, pour former un ressort spiral, un lingot de l'alliage antiferromagnétique est forgé à chaud. Le forgeage du lingot est réalisé à une température inférieure à la température de fusion de l'alliage, préférentiellement inférieure ou égale à 1100 °C. Cependant, la température de forgeage est avantageusement supérieure à 800 °C. Le forgeage permet d'obtenir des barres dont le diamètre est préférentiellement compris entre 10 mm et 40 mm, plus préférentiellement entre 15 mm et 25 mm.

Les barres obtenues par forgeage à chaud sont ensuite laminées à chaud puis à froid jusqu'à un diamètre de 5 mm.

De manière avantageuse, le laminage est effectué après un traitement thermique à une température préférentiellement comprise entre 1200 °C et 800 °C, plus préférentiellement entre 1100 °C et 900 °C pour abaisser sa dureté.

Avantageusement, les barres d'un diamètre de 5 mm sont ensuite tréfilées à froid jusqu'au diamètre désiré, avantageusement de l'ordre de 0,5 mm. Au cours du tréfilage, un ou plusieurs traitements thermiques peuvent être mis en œuvre. Ces traitements thermiques sont mis en œuvre à une température avantageusement comprise entre 800 °C et 1200 °C, plus avantageusement entre 900 °C et 1100 °C.

L'alliage peut ensuite être tréfilé jusqu'à un diamètre final avantageusement inférieur à 100 µm puis laminé, enroulé et fixé pour former un ressort spiral.

L'invention et les avantages qui en découlent ressortiront mieux des figures et exemples suivants donnés afin d'illustrer l'invention et non de manière limitative.

### DESCRIPTION DES FIGURES

La figure 1 représente le module d'Young de l'alliage Nivarox (38 à 41 % de nickel, 7.8 à 8 % de chrome, 1 % de titane, 0.2 % de silicium, 0.4 % de manganèse, 0.8 à 0.9 % de béryllium, et la balance de fer) en fonction de la température.
La figure 2 illustre le cycle d'hystérésis magnétique du même alliage Nivarox.
La figure 3 illustre l'évolution du module d'Young d'un alliage selon l'invention en fonction de la température, après différents traitements thermiques.
Les figures 4 à 15 illustrent les cycles d'hystérésis magnétiques d'un alliage selon l'invention en fonction de la température et le temps de traitement thermique.
La figure 16 correspond à une simulation du diagramme de la répartition des différentes phases d'un alliage selon l'invention en fonction de la température.

### EXEMPLES DE REALISATION DE L'INVENTION

Plusieurs exemples d'alliages ont été réalisés selon l'invention (INV-1 à INV-12) ont été préparés selon les étapes suivantes :
- fonte des constituants de l'alliage,
- purification de l'alliage,
- obtention de l'alliage
- traitement mécanique (de préférence de forgeage, mais applicable aussi à du tréfilage) et traitement thermique de l'alliage.

Les conditions expérimentales du traitement thermique (réalisé après l'étape de purification) sont précisées dans le tableau 1.

**Tableau 1 : conditions de préparation des alliages selon l'invention INV-1 à INV-12.**

| Conditions | INV-1 (figures 3 et 4) | INV-2 (figures 3 et 5) | INV-3 (figures 3 et 6) | INV-4 (figures 3 et 7) | INV-5 (figures 3 et 8) | INV-6 (figures 3 et 9) |
|---|---|---|---|---|---|---|
| temps | 30 min | 60 min | 30 min | 60 min | 30 min | 60 min |
| Température de fixage | 500 °C | 500 °C | 550 °C | 550 °C | 600 °C | 600 °C |
| Conditions | INV-7 (figures 3 et 10) | INV-8 (figures 3 et 11) | INV-9 (figures 3 et 12) | INV-10 (figures 3 et 13) | INV-11 (figures 3 et 14) | INV-12 (figures 3 et 15) |
| Temps | 30 min | 60 min | 30 min | 60 min | 30 min | 60 min |
| Température de fixage | 650 °C | 650 °C | 700 °C | 700 °C | 780 °C | 780 °C |

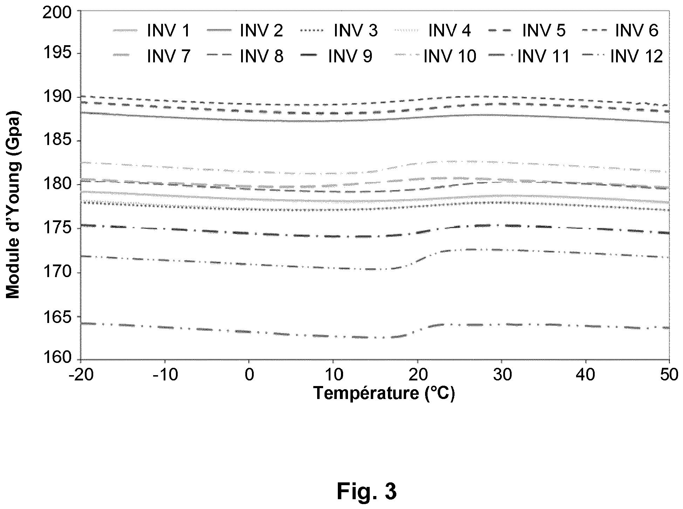

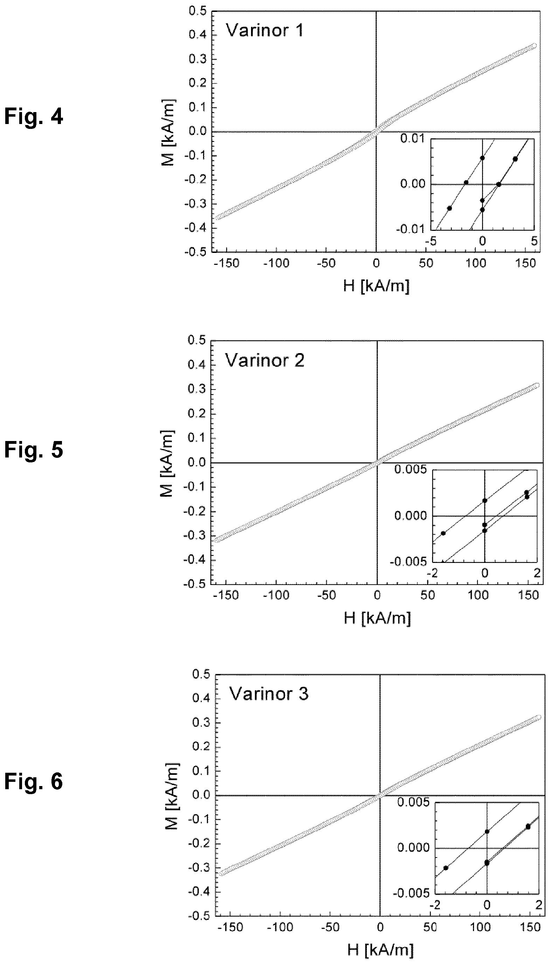

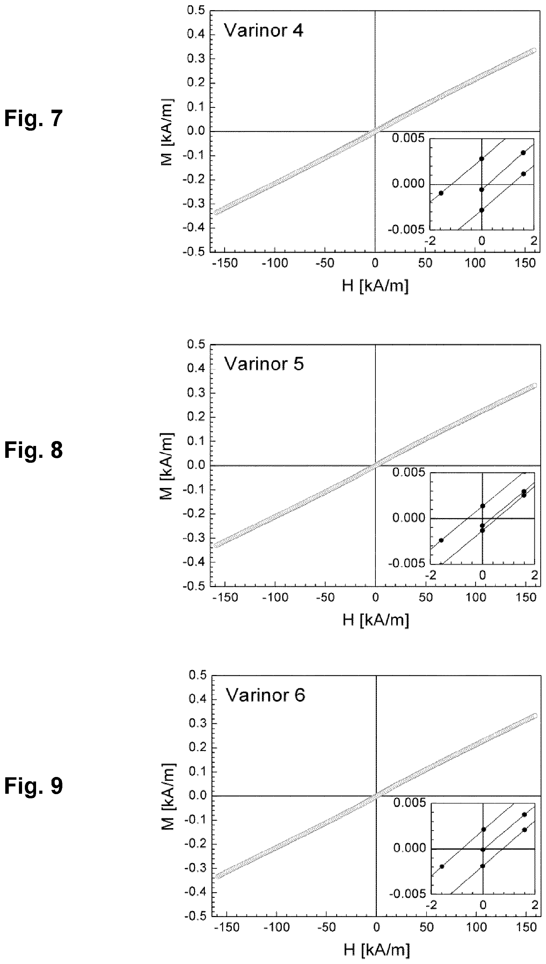

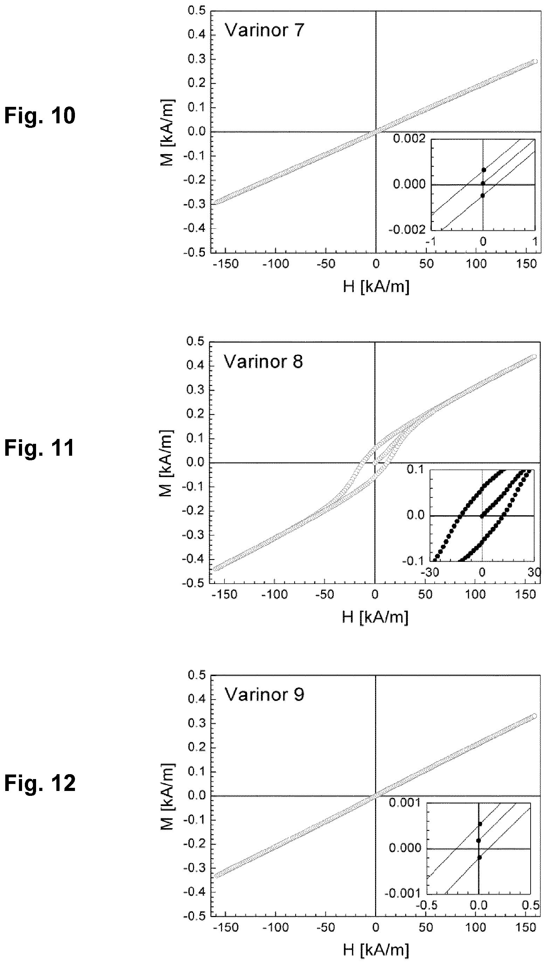

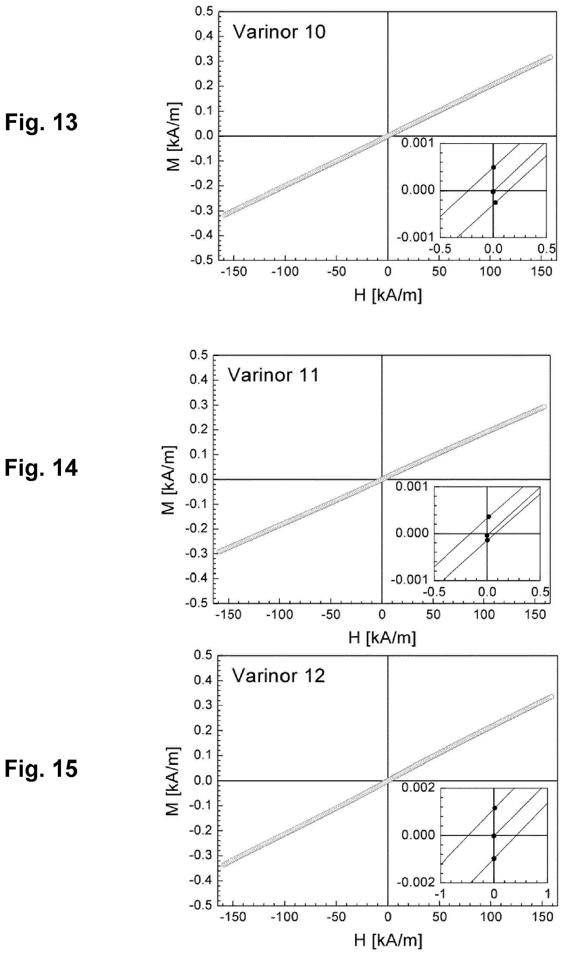

Les figures 4 à 15 illustrent les cycles d'hystérésis magnétiques des alliages selon les exemples INV-1 à INV-12. Ces alliages présentent la même composition, selon l'invention, mais ils ont subi des traitements différents. Les figures 4 à 15 reflètent donc les cycles d'hystérésis magnétiques en fonction de la température et du temps de traitement thermique. L'influence de ces deux facteurs de recuit est visible sur les mesures magnétiques (figures 4 à 15). On peut aussi voir l'influence de la température et du temps sur l'évolution du l'anomalie de comportement de la mesure du module d'Young en fonction de la température (figure 3).

Des mesures magnétiques ont été réalisées sur les exemples selon l'invention INV-1 à INV-12. La masse et la densité mesurées ainsi que le volume des échantillons sont données dans le tableau 2.

**Tableau 2 : masse, densité et volume des échantillons selon l'invention**

| Exemples | masse (mg) | densité (g/cm³) | volume (cm³) |
|---|---|---|---|
| INV-1 | 5,55 | 7,977 | 6,9575.10⁻⁴ |
| INV-2 | 5,95 | 8,00725 | 7,43077.10⁻⁴ |
| INV-3 | 3,87 | 7,8399 | 4,93629.10⁻⁴ |
| INV-4 | 2,78 | 7,9478 | 3,49782.10⁻⁴ |
| INV-5 | 2,71 | 8,0159 | 3,38078.10⁻⁴ |
| INV-6 | 6,14 | 8,003 | 7,67212.10⁻⁴ |
| INV-7 | 5,55 | 8,0059 | 6,93239.10⁻⁴ |
| INV-8 | 2,99 | 7,9704 | 3,75138.10⁻⁴ |
| INV-9 | 3,23 | 7,9798 | 4,04772.10⁻⁴ |
| INV-10 | 5,78 | 7,9574 | 7,26368.10⁻⁴ |
| INV-11 | 6,29 | 7,9319 | 7,93.10⁻⁴ |
| INV-12 | 6,72 | 7,9897 | 8,41083.10⁻⁴ |

La mesure du moment magnétique en fonction du champ magnétique appliqué a été effectuée en mode VSM (échantillon vibrant) avec une fréquence de 14 Hz et une amplitude de 3 mm.

Les cycles d'hystérésis magnétiques ont été mesurés sur cinq quadrants (figures 4 à 15), allant d'un champ minimum de -2000 Oe (∼-159 kA/m) à un champ maximum de +2000 Oe (∼+159 kA/m), avec un pas de 20 Oe (∼1592 A/m).

Les valeurs de champ coercitif, champ rémanent, aimantation saturée, sont résumées dans le tableau 3.

**Tableau 3 : propriétés des échantillons selon l'invention**

| Exemples | champ coercitif (kA/m) | aimantation rémanente (A/m) | aimantation saturée (kA/m) | susceptibilité dM/dH à M=0 |
|---|---|---|---|---|
| INV-1 | 1,66 | 5,8 | non-saturé | 0,00317 |
| INV-2 | 0,73 | 1,7 | non-saturé | 0,00216 |
| INV-3 | 0,70 | 1,8 | non-saturé | 0,00228 |
| INV-4 | 1,17 | 2,8 | non-saturé | 0,00224 |
| INV-5 | 0,56 | 1,4 | non-saturé | 0,00225 |
| INV-6 | 0,78 | 2,1 | non-saturé | 0,00226 |
| INV-7 | 0,25 | 0,6 | non-saturé | 0,00190 |
| INV-8 | 1,25 | 5,9 | non-saturé | 0,00429 |
| INV-9 | 0,10 | 0,5 | non-saturé | 0,00216 |
| INV-10 | 0,16 | 0,5 | non-saturé | 0,00203 |
| INV-11 | 0,10 | 0,34 | non-saturé | 0,00191 |
| INV-12 | 0,48 | 1,2 | non-saturé | 0,00223 |

On voit que les traitements thermiques permettent d'abaisser clairement le magnétisme rémanent. On peut ainsi choisir le traitement thermique optimal pour cet alliage précis. Une mesure à plus haut champ (2T) a été réalisée afin de rechercher une éventuelle saturation mais le comportement linéaire de M(H) est conservé, indiquant que la saturation en champ se trouve probablement au-delà des limites de ce système.

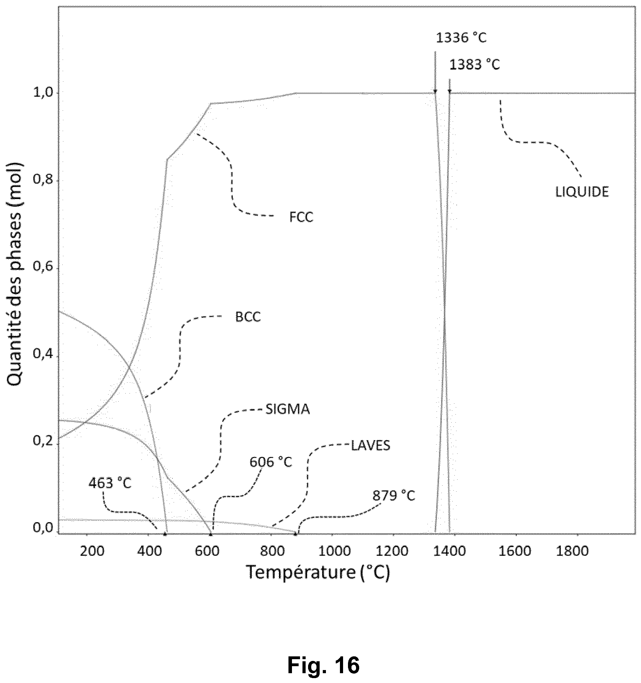

La figure 16 correspond à une simulation illustrant les différentes phases de cet alliage en fonction de la température, et plus particulièrement la proportion des phases sigma (phase intermétallique), phase de Laves, réseaux BCC (cubique centré) et FCC (cubique à faces centrées), et phase liquide. Ce diagramme renseigne également les températures de solidification (≤ 1336 °C) et de liquéfaction ou fusion (≥ 1383 °C) de l'alliage.

## Revendications

1. Alliage antiferromagnétique ayant une composition constituée de :
• de 10,0 % à 30,0 % en poids de manganèse,
• de 4,0 % à 10,0 % en poids de chrome,
• de 5,0 % à 15,0 % en poids de nickel,
• de 0,1 % à 2,0 % en poids de titane,
• le reste étant du fer et des impuretés résiduelles,
• l'alliage étant exempt de béryllium.

2. Alliage selon la revendication 1, ***caractérisé* en ce que** la teneur en manganèse est comprise entre 24 % et 26 % en poids.

3. Alliage selon l'une des revendications 1 ou 2, ***caractérisé* en ce que** la teneur en chrome est comprise entre 7 % et 9 % en poids.

4. Alliage selon l'une des revendications 1 à 3, ***caractérisé* en ce que** la teneur en nickel est comprise entre 5,5 % et 7,5 % en poids.

5. Alliage selon l'une des revendications 1 à 4, ***caractérisé* en ce que** la teneur en titane est comprise entre 0,3 % et 1,2 % en poids.

6. Composant de mouvement horloger au moins en partie constitué d'un alliage selon l'une des revendications 1 à 5.

7. Composant selon la revendication 6, ***caractérisé* en ce qu'**il s'agit d'un résonateur.

8. Composant selon la revendication 6 ou 7, ***caractérisé* en ce qu'**il s'agit d'un résonateur sous forme de ressort spiral, ou d'un résonateur à lames flexibles, ou d'un résonateur à pivot virtuel.

9. Mouvement horloger comprenant au moins un composant selon l'une des revendications 6 à 8.

10. Montre comprenant un mouvement horloger selon la revendication 9.

11. Procédé pour réaliser un alliage selon l'une des revendications 1 à 5, comportant notamment les étapes successives suivantes :
• une étape de fonte des constituants de l'alliage, réalisée en une ou plusieurs phases et à une température T_{fon}, permettant de former l'alliage contenant les métaux désirés, la température T_{fon} étant comprise entre 1250 °C et 1450 °C
• une étape de purification, réalisée en une ou plusieurs phases, permettant d'enlever les impuretés des constituants de l'alliage tout en limitant l'évaporation de manganèse, et opérée à une température Tₚᵤᵣ et à une pression P supérieure à 10 bar et inférieure ou égale à 50 bar, la température Tₚᵤᵣ étant comprise entre 1250 °C et 1450 °C.

12. Procédé selon la revendication 11, ***caractérisé* en ce que**, à l'issue de l'étape de purification, l'alliage présente une teneur totale en impuretés inférieure ou égale à 1500 ppm.

13. Procédé selon l'une des revendications 11 ou 12, ***caractérisé* en ce qu'**il résulte de l'étape de purification une variation en manganèse inférieure ou égale à 5 % en poids, par rapport à la quantité de manganèse résultant de l'étape de fonte.

14. Procédé selon l'une des revendications 11 à 13, ***caractérisé* en ce que** la température Tₚᵤᵣ de l'étape de purification est comprise entre 1300 °C et 1400 °C, et **en ce que en ce que** la température T_{fon} de l'étape de fonte des constituants de l'alliage est comprise entre 1300 °C et 1400 °C.

15. Procédé selon l'une des revendications 11 à 14, ***caractérisé* en ce que** l'étape de purification est réalisée à une pression P supérieure à à 20 bar, et avantageusement inférieure ou égale à 50 bar.

16. Procédé selon la revendication 15, ***caractérisé* en ce que** le procédé de l'étape de purification est un procédé de refusion sous laitier électro-conducteur sous pression.

## Patentansprüche

1. Antiferromagnetische Legierung mit einer Zusammensetzung bestehend aus
• 10,0 bis 30,0 Gewichts-% Mangan,
• 4,0 bis 10,0 Gewichts-% Chrom,
• 5,0 bis 15,0 Gewichts-% Nickel,
• 0,1 bis 2,0 % Gewichts-% Titan,
• beim Rest handelt es sich um Eisen und Restverunreinigungen,
• die Legierung ist berylliumfrei.

2. Legierung nach Anspruch 1, ***dadurch gekennzeichnet, dass*** der Mangangehalt zwischen 24 und 26 Gewichts-% liegt.

3. Legierung nach einem der Ansprüche 1 oder 2, ***dadurch gekennzeichnet, dass*** der Chromgehalt zwischen 7 und 9 Gewichts-% liegt.

4. Legierung nach einem der Ansprüche 1 bis 3, ***dadurch gekennzeichnet, dass*** der Nickelgehalt zwischen 5,5 und 7,5 Gewichts-% liegt.

5. Legierung nach einem der Ansprüche 1 bis 4, ***dadurch gekennzeichnet, dass*** der Titangehalt zwischen 0,3 und 1,2 Gewichts-% liegt.

6. Bauteil des Uhrwerks, zumindest zum Teil bestehend aus einer Legierung nach einem der Ansprüche 1 bis 5.

7. Bauteil nach Anspruch 6, ***dadurch gekennzeichnet, dass*** es sich um einen Resonator handelt.

8. Bauteil nach Anspruch 6 oder 7, ***dadurch gekennzeichnet, dass*** es sich um einen Resonator in Form einer Spiralfeder oder einen Resonator mit flexiblen Federblättern oder einen Resonator mit virtuellem Drehpunkt handelt.

9. Uhrwerk mit mindestens einem Bauteil nach einem der Ansprüche 6 bis 8.

10. Uhr mit einem Uhrwerk nach Anspruch 9.

11. Verfahren zur Herstellung einer Legierung nach einem der Ansprüche 1 bis 5, das die nachstehenden, aufeinanderfolgenden Schritte umfasst:
• einen Schritt des Schmelzens der Bestandteile der Legierung, in einer oder mehreren Phasen und mit einer Temperatur T_{fon}, bei der die Legierung gebildet werden kann, die die gewünschten Metalle enthält, die Temperatur T_{fon} liegt dabei zwischen 1250 °C und 1450 °C
• einen Schritt der Reinigung, durchgeführt in einer oder mehreren Phasen, bei dem die Verunreinigungen der Bestandteile der Legierung entfernt werden können, wobei gleichzeitig das Verdampfen des Mangans begrenzt wird und der durchgeführt wird bei einer Temperatur Tₚᵤᵣ und einem Druck P der höher ist als 10 bar und kleiner oder gleich 50 bar, die Temperatur Tₚᵤᵣ liegt dabei zwischen 1250 °C und 1450 °C.

12. Verfahren nach Anspruch 11, ***dadurch gekennzeichnet, dass*** am Ende des Reinigungsschritts die Legierung einen Gesamtgehalt an Verunreinigungen von kleiner oder gleich 1500 ppm aufweist.

13. Verfahren nach einem der Ansprüche 11 oder 12, ***dadurch gekennzeichnet, dass*** sich aus dem Reinigungsschritt eine Veränderung beim Mangan von kleiner oder gleich 5 Gewichts-%, bezogen auf die Manganmenge nach dem Schmelzschritt ergibt.

14. Verfahren nach einem der Ansprüche 11 bis 13, ***dadurch gekennzeichnet, dass*** die Temperatur Tₚᵤᵣ des Reinigungsschrittes zwischen 1300 °C und 1400 °C liegt, und dadurch, dass die Temperatur T_{fon} des Schmelzschritts der Bestandteile der Legierung zwischen 1300 °C und 1400 °C liegt.

15. Verfahren nach einem der Ansprüche 11 bis 14, ***dadurch gekennzeichnet, dass*** der Reinigungsschritt bei einem Druck P höher als 20 bar, und vorteilhafterweise kleiner oder gleich 50 bar durchgeführt wird.

16. Verfahren nach Anspruch 15, ***dadurch gekennzeichnet, dass*** das Verfahren des Reinigungsschrittes ein Elektroschlacken- Umschmelzverfahren unter Druck ist.

## Claims

1. An antiferromagnetic alloy having a composition constituted of:
• 10.0% to 30.0% by weight manganese,
• 4.0% to 10.0% by weight chromium,
• 5.0% to 15.0% by weight nickel,
• 0.1% to 2.0% by weight titanium,
• the remainder being iron and residual impurities,
• the alloy being free of beryllium.

2. The alloy according to claim 1, ***characterized* in that** the manganese content is between 24% and 26% by weight.

3. The alloy according to one of claims 1 or 2, ***characterized* in that** the chromium content is between 7% and 9% by weight.

4. The alloy according to one of claims 1 to 3, ***characterized* in that** the nickel content is between 5.5% and 7.5% by weight.

5. The alloy according to one of claims 1 to 4, ***characterized* in that** the titanium content is between 0.3% and 1.2% by weight.

6. A timekeeping movement component at least partially constituted of an alloy according to one of claims 1 to 5.

7. The component according to claim 6, ***characterized* in that** it is a resonator.

8. The component according to claim 6 or 7, ***characterized* in that** it is a resonator in the form of a balance spring, or a flexible strip resonator, or a virtual pivot resonator.

9. A timekeeping movement component comprising at least one component according to one of claims 6 to 8.

10. A watch comprising a timekeeping movement according to claim 9.

11. A method for preparing an alloy according to one of claims 1 to 5, notably comprising the following successive steps:
• a step of melting the constituents of the alloy, carried out in one or more phases and at a temperature Tₘₑₗₜ, enabling the alloy containing the desired metals to be formed, the temperature Tₘₑₗₜ being between 1250°C and 1450°C,
• a purification step, carried out in one or more phase(s), enabling the impurities from the constituents of the alloy to be removed while limiting the evaporation of manganese, and carried out at a temperature Tₚᵤᵣ and a pressure P greater 10 bar and lower than or equal to 50 bar, the temperature Tₚᵤᵣ being between 1250°C and 1450°.

12. The method according to claim 11, ***characterized* in that**, at the end of the purification step, the alloy has a total impurities content of less than or equal to 1,500 ppm.

13. The method according to one of claims 11 or 12, ***characterized* in that** the purification step results in a variation in the manganese of less than or equal to 5% by weight, relative to the quantity of manganese resulting from the melting step.

14. The method according to one of claims 11 to 13, ***characterized* in that** the temperature Tₚᵤᵣ of the purification step is between 1300°C and 1400°C,
and **in that** the temperature Tₘₑₗₜ of the step of melting the constituents of the alloy is between 1300°C and 1400°C.

15. The method according to one of claims 11 to 14, ***characterized* in that** the purification step is carried out at a pressure P greater than 20 bar, and advantageously lower than or equal to 50 bar.

16. The method according to claim 15, ***characterized* in that** the method of the purification step is an electro conducting slag pressure method.
